Europäisches Patentamt

European Patent Office

Office européen des brevets

(19)

(11) Veröffentlichungsnummer : **0 491 447 B1**

## (12) EUROPÄISCHE PATENTSCHRIFT

(45) Veröffentlichungstag der Patentschrift :
25.01.95 Patentblatt 95/04

(51) Int. Cl.⁶ : **H02G 15/068, H02G 15/184**

(21) Anmeldenummer : **91250311.7**

(22) Anmeldetag : **11.11.91**

(54) **Kunststoffisoliertes Hochspannungskabel mit einem aufgeschobenen Steuerelement.**

(30) Priorität : **19.12.90 EP 90250318**

(43) Veröffentlichungstag der Anmeldung :
**24.06.92 Patentblatt 92/26**

(45) Bekanntmachung des Hinweises auf die
Patenterteilung :
**25.01.95 Patentblatt 95/04**

(84) Benannte Vertragsstaaten :
**CH DE FR GB IT LI**

(56) Entgegenhaltungen :
**BE-A- 0 893 510**

(56) Entgegenhaltungen :
DE-A- 3 042 595
DE-A- 3 300 901
**ELEKTROTECHNISCHE ZEITSCHRIFT, Ausgabe A, Bd. 97, Nr. 3, März 1976, Berlin, DE,
Seiten 160-162 ; J. FRIEDRICH "Neue Garniturengeneration für PE-isolierte Höchstspannungskabel"**

(73) Patentinhaber : **SIEMENS
AKTIENGESELLSCHAFT
Wittelsbacherplatz 2
D-80333 München (DE)**

(72) Erfinder : **Pöhler, Stephan, Dr.
Düsterhauptstrasse 42
W-1000 Berlin 28 (DE)**

EP 0 491 447 B1

**Beschreibung**

Die Erfindung liegt auf dem Gebiet der Garnituren für kunststoffisolierte Hochspannungskabel und ist bei der konstruktiven Ausgestaltung eines Steuerelementes anzuwenden, das aus einem elektrisch isolierenden Teil und einem darin eingebetteten elektrisch leitenden Teil besteht.

Es ist bereits bekannt, zur Herstellung von Endverschlüssen an kunststoffisolierten, insbesondere VPE-isolierten Hochspannungskabeln mit einer Übertragungsspannung größer/gleich 110 kV aufschiebbare Steuerelemente zu verwenden, wie sie sich bereits im Spannungsbereich 10 - 30 kV bewährt haben. Solche vorgefertigten Steuerelemente bestehen aus einem elektrisch isolierenden Teil und einem darin eingebetteten elektrisch leitenden Teil aus jeweils einem gummielastischen Material, insbesondere aus Silikonkautschuk, und werden unter elastischer Aufweitung derart auf die freigelegte Kabelisolierung aufgeschoben, daß das elektrisch leitende Teil des Steuerelementes mit einem Teilbereich seiner axialen Länge unmittelbar auf der abgesetzten äußeren Leitschicht des Kabels und auf der freigelegten Kunststoffisolierung aufliegt. Das elektrisch leitende Teil hat dabei in seinem aktiven Bereich eine bestimmte Außenkontur, wodurch das elektrische Feld im Bereich der Absetzstelle der äußeren Leitschicht des Kabels gesteuert wird (DE-Z "etz-a", 1976, Seiten 160/161).

Um derartige Steuerelemente auch bei Kabeln mit einer Übertragungsspannung von 220 kV und höher handhaben zu können, hat man vorgesehen, das Steuerelement in ein hohlzylindrisches Innenteil und ein hohlzylindrisches Außenteil zu teilen, wobei sowohl das Innenteil als auch das Außenteil einen Teil des elektrisch leitenden Steuertrichters enthalten. Die Ausdehnung des Steuertrichters in axialer Richtung ist dabei relativ groß (DE-A-34 20 500). Ein radial zweigeteilter Aufbau des Steuerelementes ist auch bereits bei Verbindungsmuffen für Mittelspannungskabel bekannt (DE-A-26 21 642). Für Mittelspannungskabel ist weiterhin eine Verbindungsmuffe bekannt, bei der der Steuertrichter allein in einem Innenteil der Muffe eingebettet und in seinem aktiven Bereich mit einem sogenannten "Borda - Profil" ausgestattet ist (DE-A-30 42 595). Mit einem solchen Profil läßt sich bei kleiner Bauform über die gesamte Randkontur des Steuertrichters ein konstanter Feldverlauf erzielen, so daß das isolierende Teil des Steuerelementes in der Randzone nicht stärker beansprucht wird als im Homogenbereich. - Für den feldstärkekonstanten Übergang von einer Halbebene auf eine Vollebene hat dabei H. Prinz in seinem Buch "Hochspannungsfelder" (R. Oldenbourg Verlag, München + Wien, 1969, Seiten 196 - 209) die Randkontur der Halbebene (unsymmetrisches Borda-Profil) mit folgenden Gleichungen beschrieben:

$$x = \sin \text{psi} - \text{psi}$$
$$y = 1 - \cos \text{psi} + 2 \ln \cos \text{psi}/2 \qquad \text{mit psi} = 0 \ldots \text{pi.}$$

Es wurde auch schon versucht, Steuertrichter mit einem Borda-Profil nicht nur bei aufschiebbaren Garnituren im Mittelspannungsbereich, sondern auch bei einem Endverschluß auf Gießharzbasis für Hochspannungskabel mit einer Übertragungsspannung von 110 kV einzusetzen. Hierzu wurde der Giesharzisolator am unteren Ende mit einer Ringausnehmung versehen, die nach einem Borda-Profil ausgebildet ist und eine leitfähige Beschichtung trägt. Die Zuordnung der feldsteuernden Kontur zur Absetzstelle der äußeren Leitschicht ist dabei aber wegen Verwendung eines Adapters aus elastomerem Material nicht eindeutig (DE-A 33 00 901).

Ausgehend von einem kunststoffisolierten Hochspannungskabel mit den Merkmalen des Oberbegriffes des Patentanspruches 1 liegt der Erfindung die Aufgabe zugrunde, ein aufschiebbares Steuerelement zu schaffen, das sich auch bei seiner Anwendung für Kabel mit einer Übertragungsspannung von mehr als 110 kV durch eine kleine, einteilige Bauform auszeichnet und daher leicht handhabbar ist.

Zur Lösung dieser Aufgabe ist gemäß der Erfindung vorgesehen, daß die Außenkontur des feldsteuernden Abschnittes nach Art eines Borda-Profils ausgebildet ist, wobei diese Außenkontur den Bedingungen

$$y = \frac{r_a - r_i}{pi} (\sin \text{psi} - \text{psi} + 3,1384) \text{ <mm>,}$$

$$x = \frac{r_a - r_i}{pi} ST (1 - \cos \text{psi} + 2 \ln \cos \text{psi}/2 + 12,271) \text{ <mm>}$$

und

ST ungefähr/gleich 1,1 für $r_a/r_i$ kleiner 1,8
   ungefähr/gleich 1,2 für $r_a/r_i$ gleich 1,8 bis 2,5
   ungefähr/gleich 1,3 für $r_a/r_i$ größer 2,5
   genügt,

mit

x = Koordinate in Längsrichtung des Kabels,

y = Koordinate in radialer Richtung des Kabels,

$r_a$ = Außenradius der freigelegten Kabelisolierung,

$r_i$ = Innenradius der Kabelisolierung,

psi = ebener Winkel der Konturtangente zur x-Achse mit den Werten von 3,14 ... bis ... 0 und

ST = Streckungsfaktor.

Bei einer derartigen Dimensionierung der feldsteuernden Kontur ist in Abhängigkeit von dem Leiterquerschnitt des Höchstspannungskabels sowie in Abhängigkeit von der Wanddicke der Kunststoffisolierung und damit in Abhängigkeit von der Übertragungsspannung (größer/gleich 60 kV) eine in axialer Richtung möglichst kurze und eine in radialer Richtung möglichst dünnwandige Ausgestaltung des Steuerelementes als Ganzes gewährleistet, so daß ein solches mit einem möglichst geringen Volumen ausgestattetes Steuerelement auch für Übertragungsspannungen von 400 kV einteilig ausgebildet sein kann. Damit ist die Montage eines entsprechenden Endverschlusses oder auch einer Verbindungsmuffe wesentlich erleichtert. Die axial sehr kurze aktive Länge des eigentlichen Steuertrichters ist dabei durch die Maßnahme gewährleistet, den Verlauf der Kontur nicht für alle Werte des ebenen Winkels der Konturtangente von 0 ... bis ... pi zu berücksichtigen, sondern nur für Winkel bis zum Wert 3,14. Dadurch wird die an sich asymptotisch verlaufende Randkontur an einer Stelle abgebrochen, die einerseits eine hinreichende Homogenität des elektrischen Feldes an dieser Stelle und andererseits eine für die praktische Anwendung notwendige kurze axiale Länge des aktiven Bereiches des Steuertrichters und damit des Steuerelementes als Ganzes gewährleistet. - In dieser Hinsicht wurde ermittelt, daß die notwendigen elektrischen Eigenschaften, (u.a. die Wechselspannungsfestigkeit) des Steuerelementes voll gewährleistet sind, wenn die aktive Länge $L_S$ des Steuerelementes bis auf einen Wert reduziert wird, der gleich ist der aktiven Länge $L_D$ des elektrisch leitenden Teiles plus dem 8,125-fachen der Wandstärke $s = r_a - r_i$ der Kabelisolierung und wenn der Außenradius $r_s$ des Steuerelementes bis auf einen Wert reduziert wird, der der Bedingung

$$r_s = 2 (r_a - r_i) + r_i + 1,2 (r_a - r_i) \text{ <mm>}$$

genügt.

Um an dem als Abhebekante bezeichneten Übergang vom zylindrischen Verlauf der Außenkontur des elektrisch leitenden Teiles auf das Borda-Profil gute mechanische Eigenschaften (beim Aufschieben des Steuerelementes) zu erreichen und zugleich zu große Inhomogenitäten des elektrischen Feldes auszuschalten, empfiehlt es sich im übrigen, diesen Übergang als nach außen gerundete Stufe mit einem Krümmungsradius von etwa 0,5 bis 1 mm auszugestalten.

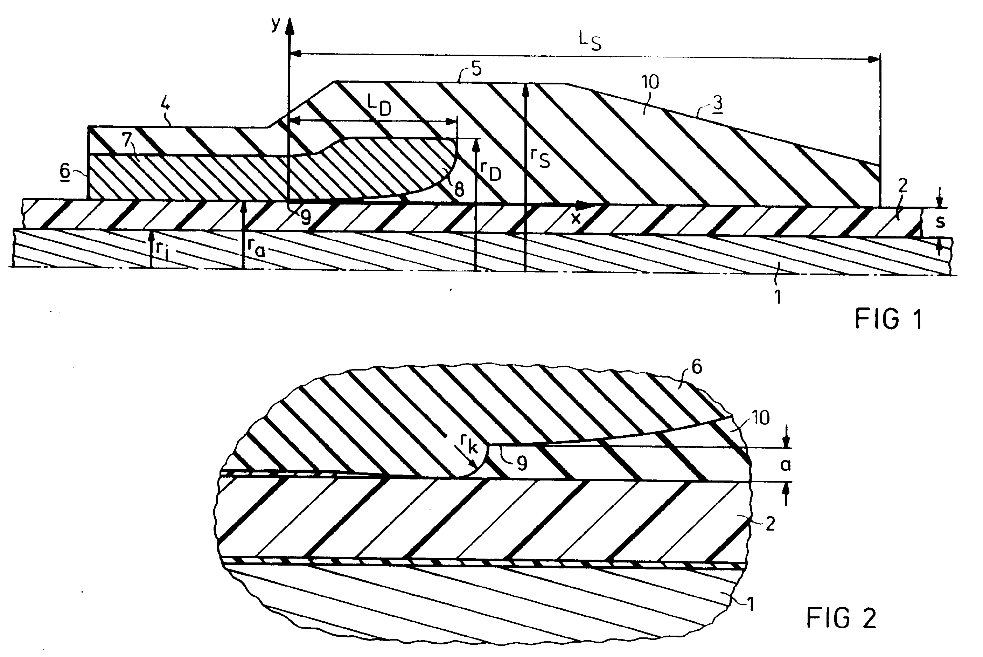

Ein Ausführungsbeispiel eines gemäß der Erfindung ausgebildeten und auf das Ende eines kunststoffisolierten Hochspannungskabels aufgeschobenen Steuerelementes ist in den Figuren 1 und 2 dargestellt. Dabei zeigt

Figur 1 im Halbschnitt sowie in schematischer Darstellung ein auf ein Kabelende aufgeschobenes Steuerelement und

Figur 2 in vergrößertem Ausschnitt den Bereich der Abhebekante.

Gemäß Figur 1 ist auf das entsprechend zubereitete Ende eines Hochspannungskabels mit dem Leiter 1 und mit der Isolierung 2 aus vernetztem Polyäthylen ein Steuerelement 3 aus Silikonkautschuk unter elastischer Aufweitung aufgeschoben. Die Kunststoffisolierung 2 hat einen Innendurchmesser (gemessen über der inneren, auf den Leiter 1 aufgebrachten Leitschicht) der Abmessung $2 r_i$ und einen Außendurchmesser (nach Abtragung der äußeren Leitschicht) mit dem Wert $2 r_a$, so daß die Wanddicke der Kunststoffisolierung $s = r_a - r_i$ beträgt. - Schirm und Mantel des Hochspannungskabels sind nicht näher dargestellt.

Das Steuerelement 3 weist ein hohlzylindrisches Halsteil 4 und ein doppelkegeliges, mit einem zylindrischen Zwischenabschnitt versehenes Steuerteil 5 auf und besteht dabei aus einem isolierenden Teil 10 und einem in das isolierende Teil eingebetteten elektrisch leitenden Teil 6 in Form eines sogenannten Steuertrichters oder Deflektors. Der hohlzylindrische Halsteil 7 des Steuertrichters 6 bildet dabei einen Längsabschnitt der Bohrung des Steuerelementes 3. Im übrigen Bereich wird die Oberfläche der Bohrung des Steuerelementes 3 von dem isolierenden Teil 10 gebildet.

Der Steuertrichter 6 ist im Anschluß an den hohlzylindrischen Halsteil mit einem aktiven Steuerteil 8 versehen, dessen Außenkontur im eigentlichen Steuerbereich der im Patentanspruch 1 angegebenen Bedingungen genügt. Am Übergang vom hohlzylindrischen Halsteil 7 auf den aktiven Steuerteil 8 ist eine Abhebekante 9 vorgesehen, die gemäß Figur 2 als nach außen gerundete Stufe mit einem Krümmungsradius $r_k$ gestaltet ist. Die Höhe a der Stufe ist gleich oder größer als der Krümmungsradius $r_k$.

In Figur 1 ist an der Stelle der Abhebekante 9 ein Koordinatenkreuz eingezeichnet, dessen Koordinate x in Längsrichtung des Steuerelementes und dessen Koordinate y in radialer Richtung des Steuerelementes weist. Die im Patentanspruch 1 angegebenen Randbedingungen oder Gleichungen für die Koordinaten x und y berücksichtigen diese Lage des Koordinatenkreuzes.

Der maximale Außendurchmesser 2 $r_D$ des Steuertrichters 6 ist nur am axialen Ende des aktiven Steuerteiles 8 erforderlich. Im übrigen Bereich - insbesondere im Bereich des hohlzylindrischen Halsteiles 7 - kann der Steuertrichter einen kleineren Durchmesser haben, angepaßt an die mechanischen und elektrischen Randbedingungen. - Der Außendurchmesser 2 $r_S$ des Steuerelementes sowie die maximale Länge $L_S$ des aktiven Bereiches des Steuerelementes 3 berücksichtigen die notwendigen Anforderungen hinsichtlich der Stoß- und der Wechselspannungsfestigkeit des Steuerelementes bzw. einer mit Hilfe des Steuerelementes montierten Kabelgarnitur. Die maximale Länge $L_D$ des aktiven Steuerteiles ergibt sich aus der Gleichung für die x-Koordinate.

Die Außenkontur des aktiven Steuerteiles 8 des Steuertrichters 6 und die Außenabmessungen des Steuerelementes 3, wie sie sich gemäß den Patentansprüchen 1 und 2 unter Berücksichtigung des Innendurchmessers und des Außendurchmessers der Kunststoffisolierung 2 ergeben, sind empirisch/rechnerisch ermittelte Optimalwerte, die im Sinne einer Vergrößerung des Steuerelementes durchaus überschritten werden können. Im Sinne einer möglichst kleinen Bauform des Steuerelementes 3 erscheint es jedoch wenig zweckmäßig, diese Optimalwerte um mehr als 20 % zu überschreiten.

## Patentansprüche

1.  Kunststoffisoliertes Hochspannungskabel mit einem im Bereich eines Endverschlusses oder einer Verbindungsmuffe unter elastischer Aufweitung aufgeschobenen Steuerelement (3), das aus einem elektrisch isolierenden Teil (10) und einem darin eingebetteten elektrisch leitenden Teil (6) besteht, wobei die Wanddicke der Kunststoffisolierung wenigstens 10 mm beträgt und das elektrisch leitende Teil aus einem hohlzylindrischen Abschnitt (4, 7) und aus einem sich daran anschließenden feldsteuernden Abschnitt (8) besteht und mit einem Teilbereich seiner axialen Länge unmittelbar auf der abgesetzten äußeren Leitschicht und auf der freigelegten Kunststoffisolierung (2) des Hochspannungskabels aufliegt,
    **dadurch gekennzeichnet,**
    daß die Außenkontur des feldsteuernden Abschnittes (8) nach Art eines Borda-Profils ausgebildet ist, wobei diese Außenkontur den Bedingungen

    $$y = \frac{r_a - r_i}{pi}(\sin psi - psi + 3{,}1384) \text{ <mm>},$$

    $$x = \frac{r_a - r_i}{pi} ST (1 - \cos psi + 2 \ln \cos psi/2 + 12{,}271) \text{ <mm>}$$

    und
    ST    ungefähr/gleich 1,1 für $r_a/r_i$ kleiner 1,8,
          ungefähr/gleich 1,2 für $r_a/r_i$ gleich 1,8 bis 2,5,
          ungefähr/gleich 1,3 für $r_a/r_i$ größer 2,5
          genügt,
    mit
    x     = Koordinate in Längsrichtung des Kabels,
    y     = Koordinate in radialer Richtung des Kabels,
    $r_a$   = Außenradius der freigelegten Kabelisolierung,
    $r_i$   = Innenradius der Kabelisolierung,
    psi   = ebener Winkel der Konturtangente zur x-Achse mit den Werten von 3,14 ... bis ... 0 und
    ST    = Streckungsfaktor.

2.  Hochspannungskabel nach Anspruch 1,
    **dadurch gekennzeichnet,**
    daß die aktive Länge ($L_s$) des Steuerelementes (3) wenigstens gleich ist der aktiven Länge ($L_D$) des elektrisch leitenden Teiles (6) plus dem 8,125-fachen bis 11-fachen der Wandstärke (s) der Kabelisolierung und daß der Außenradius ($r_s$) des Steuerelementes der Bedingung
    $$r_s = 2 (r_a - r_i) + r_i + 1{,}2 (r_a - r_i) \text{ mm}$$
    genügt
    oder bis zu 20 % größer ist.

3.  Hochspannungskabel nach Anspruch 1 oder 2,
    **dadurch gekennzeichnet,**
    daß die Außenkontur des elektrisch leitenden Teiles (6) im Bereich der Abhebekante (9), d. h. am Übergang vom zylindrischen Verlauf auf das Borda-Profil, als nach außen gerundete Stufe (a) mit einem Krümmungsradius von etwa 0,5 bis 1 mm ausgebildet ist.

## Claims

1. Plastic-insulated high-voltage cable with a stress relief element (3), that, elastically expanded, is slid on in the area of a sealing end or a junction sleeve, which stress relief element (3) consists of an electrically-insulating part (10) and an electrically-conducting part (6) embedded therein, whereby the wall thickness of the plastic insulation is at least 10 mm and the electrically-conducting part consists of a hollow cylindrical section (4, 7) and an adjoining field-controlling section (8), and rests with a partial area of its axial length directly on the stripped outer semi-conductive layer and on the exposed plastic insulation (2) of the high-voltage cable, characterised in that
the outer contour of the field-controlling section (8) is in the form of a Borda profile, whereby this outer contour fulfils the conditions

$$y = \frac{r_a - r_i}{pi} (\sin psi - psi + 3.1384) \text{ [mm]},$$

$$x = \frac{r_a - r_i}{pi} ST (1 - \cos psi + 2 \ln \cos psi/2 + 12.271) \text{ [mm]}$$

and
ST   is approximately / equal to 1.1 if $r_a/r_i$ is less than 1.8
       approximately / equal to 1.2 if $r_a/r_i$ is equal to 1.8 to 2.5
       approximately / equal to 1.3 if $r_a/r_i$ is greater than 2.5
where:
x       = coordinate in the longitudinal direction of the cable
y       = coordinate in the radial direction of the cable
$r_a$      = external radius of the exposed cable insulation
$r_i$      = internal radius of the cable insulation,
psi      = plane angle of the contour tangent of the x-axis with the values 3.14 ... to ... 0 and
ST      = stretch factor.

2. High-voltage cable according to Claim 1,
characterised in that the active length ($L_S$) of the stress relief element (3) is at least equal to the active length ($L_D$) of the electrically-conducting part (6), plus 8.125-times to 11-times the wall thickness (S) of the cable insulation, and that the external radius ($r_s$) of the stress relief element fulfils the condition

$$r_s = 2 (r_a - r_i) + r_i + 1.2 (r_a - r_i) \text{ mm}$$

or is up to 20 % larger.

3. High-voltage cable according to Claim 1 or 2,
characterised in that in the area of the lift-off edge (9), i.e. at the transition from the cylindrical shape to the Borda profile, the outer contour of the electrically-conducting part (6) is configured as an externally-rounded step (a) with a radius of curvature of approximately 0.5 to 1 mm.

## Revendications

1. Câble à haute tension isolé par une matière plastique, comportant un élément de commande (3) emmanché dans la zone d'une fermeture d'extrémité ou d'un manchon de liaison moyennant un élargissement élastique et qui est constitué par une pièce électriquement isolante (10) et une pièce électriquement conductrice (6) enchâssée dans la précédente, et dans lequel l'épaisseur de paroi de l'isolant en matière plastique est égale à au moins 10 mm et la pièce électriquement conductrice est constituée par une section en forme de cylindre creux (4,7) et par une section (8) qui se raccorde à la précédente et commande le champ, et s'applique, sur une partie de sa longueur axiale, directement sur la couche conductrice extérieure étagée et sur l'isolant en matière plastique mis à nu (2) du câble à haute tension, caractérisé par le fait
que le contour extérieur de la section (8), qui commande le champ, est agencé à la manière d'un profil Borda,
ce contour extérieur satisfaisant aux conditions

$$y = \frac{r_a - r_i}{pi} (\sin psi - psi + 3{,}1384) <mm>$$

$$x = \frac{r_a - r_i}{pi} ST (1 - \cos psi + 2 \ln \cos psi/2 + 12{,}271) <mm>$$

et

ST      voisin de/égal à 1,1 pour $r_a/r_i$ inférieur à 1,8,

voisin de/égal à 1,2 pour $r_a/r_i$ compris entre 1,8 et 2,5,

voisin de/égal à 1,3 pour $r_a/r_i$ supérieur à 2,5,

avec

x      = coordonnée dans la direction longitudinale du câble,

y      = coordonnée dans la direction radiale du câble,

$r_a$      = rayon extérieur de l'isolation du câble mis à nu,

$r_i$      = rayon intérieur de l'isolation du câble,

psi      = angle plan de la tangente au contour pour l'axe x, possédant les valeurs allant de 3,14... à ... 0 et

ST      = facteur d'allongement.

2.    Câble à haute tension suivant la revendication 1, caractérisé par le fait que la longueur active ($L_s$) de l'élément de commande (3) est au moins égale à la longueur active ($L_D$) de la partie électriquement conductrice (6) plus un multiple, compris entre 8,125 et 11 fois, de l'épaisseur de paroi (s) de l'isolant du câble et que le rayon extérieur ($r_s$) de l'élément de commande satisfait à la condition

$$r_s = 2 (r_a - r_i) + r_i + 1{,}2 (r_a - r_i) mm$$

ou est supérieur d'une valeur atteignant jusqu'à 20 %.

3.    Câble à haute tension suivant la revendication 1 ou 2, caractérisé par le fait que le contour extérieur de la partie électriquement conductrice (6) est réalisé, dans la zone du bord d'écartement (9), c'est-à-dire au niveau de la jonction entre la forme cylindrique et le profil Borda, sous la forme d'une partie étagée (a) arrondie extérieurement et possédant un rayon de courbure compris entre environ 0,5 et 1 mm.

FIG 1

FIG 2